# EUROPEAN PATENT SPECIFICATION

(11) **EP 2 451 653 B1**
(45) Date of publication and mention of the grant of the patent: **03.07.2019**
(21) Application number: 09788209.6
(22) Date of filing: 06.07.2009
(51) Int. Cl.: B42F 13/00

(54) **FOLDER**
ORDNER
CLASSEUR

(43) Date of publication of application: 16.05.2012
(73) Proprietor: Vermeulen, Paul Leo, 1011 RG Amsterdam (NL)
(72) Inventor: Vermeulen, Paul Leo, 1011 RG Amsterdam (NL)
(74) Representative: Hoeben, Ferdinand Egon
(86) International application number: PCT/NL2009/050402
(87) International publication number: WO 2011/005076

(56) References cited:
- WO-A1-93/21021
- WO-A1-93/23257
- US-A- 2 523 202
- US-A- 4 997 207

## Description

The present invention relates to a folding construction for holding in an opened position by means of a simple hand movement a device comprising elements foldable relative to each other. The present invention also relates to a mobile computer device comprising such a folding construction.

Many forms of folder are known, such as loose-leaf binders, display folders, ring binders and the like. Such folders are highly suitable for use on a tabletop. Diverse forms of sheets, tab sheets, display folders and the like can here be attached in loose-leaf manner by means of for instance a ring binding, after which it is possible after opening the folder to leaf through the sheets and optionally show them to others. A drawback of such loose-leaf binders is that in practice they cannot really be held properly in one hand during showing of the content of the folder. The use of two hands is necessary in practice, and it is no longer possible to indicate with a finger of one of the two hands specific details on the shown pages. The hands are metaphorically 'tied' when holding the folder and can no longer be used for the purpose of for instance this indicating or for holding another object such as a cup, or for shaking hands.

US 2,523,202 discloses a display binder for a standing arrangement in several embodiments. This display binder allows for sheets in the binder to be displayed while the binder is arranged in a standing position on e.g. a table, a front board, rear board and connecting member allowing to be mutually folded in order to achieve a locking arrangement between those allowing for a standing arrangement of the binder.

In order to obviate such drawbacks the present invention provides a folding construction according to claim 1.

An advantage of such a folding construction is that in folded-open position it can be held in one hand by a user by grasping the connecting member and a part of the rear board arranged at the position of the connecting member. A further advantage is that the folding construction provides a very simple method of folding from the closed position to the opened position by means of urging the rear board and the connecting member toward each other. This operates as follows. The user holds the closed folder on the side of the connecting member and the part of the rear board connected to the connecting member. The thumb is here arranged on one side and the four fingers on the other side. Opening can be effected by moving the thumb and fingers in simple manner toward each other, whereby the connecting member and the rear board are moved toward each other, whereby the front board is moved by means of the guide member away from the rear board and is folded open. This movement is so simple that it can be performed very casually. Owing to this method of gripping during folding open and holding open only one hand is required, and the other is available. The construction of the folding construction according to the present invention is further so natural for the hand that the folding construction can be supported almost effortlessly in one hand.

In a first preferred embodiment according to the present invention the first guide member in the folding construction is mounted on the rear board, lying substantially along the transition as seen in top view between the connecting member and the front board.

An advantage hereof is that the guiding is performed in efficient manner. If the guide member is situated too far from this transition, the front board will still move away from the rear board, but perhaps no longer fold completely open without additional assistance. If the guide member displays overlap with the connecting member, folding open will be impeded. Ideally the transition is therefore situated at the position of the hinge member or slightly under the front board.

In a further preferred embodiment the guide member has a cross-sectional form with a curve in a range between at least a tangent or tangent plane substantially parallel to the rear board and a tangent or tangent plane substantially perpendicular to the rear board. The front board can hereby be guided along this curve, resulting in a smooth opening movement.

The connecting member of the folding construction comprises a support member for supporting the front board at a predetermined or adjustable angle. This support member can in simple manner be a part of the upper surface of the connecting member. Alternatively however, protrusions can for instance be provided for this purpose on the connecting member. An advantage of such a support member is that sufficient space can be reserved for the presence therein of the thumb or the four fingers of the hand holding the folding construction in the opened position.

The connecting member more preferably comprises gripping members for the purpose of improving the grip of the user of the folding construction. The grip is hereby improved in simple and efficient manner, and the force required to hold the folder is thereby reduced. The surface of the connecting member and/or a part of the rear wall can also be provided with a grip-enhancing surface, such as for instance a rough plastic, rubber and/or a surface profile increasing surface friction.

In a further preferred embodiment the folding construction comprises a fixation member for fixing the front board in the opened position with the connecting member in the opened position. The connecting member is preferably held here in an orientation in which it is situated substantially against the rear board. In this case the front board, because it is held in place by the guide member, cannot fold back against the rear board and the folding construction remains in the opened position.

This is preferably realized by applying easily releasable fixing means such as velcro tape, a magnet, a pushbutton, a clip, a snap fastener or the like. Within the concept of the present invention the skilled person will perhaps be able to apply equivalent possibilities of temporary fixation. An advantage of such fixation means is that holding of the folding construction is further alleviated, and during holding of the folding construction in the open position no grip energy need be utilized for this purpose.

In a further preferred embodiment the folding construction comprises a lamp optionally having an adjustable holder for illuminating the front board and/or the rear board. This illumination can be performed per board with a separate lamp but can also be realized by means of a lamp with a lens suitable for radiation in the width. The lamp is preferably arranged on a flexible rod. A per se known hollow flexible tube or spring can for instance be used for this purpose.

The front board and the connecting member are together preferably substantially as large as the rear board or larger than the rear board. In the closed position the front board with the connecting member is preferably as large as the rear board as seen in top view. Due to the angle between the boards the total of the area of the front board and the connecting member will in this case be slightly larger than the rear board. It is however equally possible to envisage other mutual proportions being possible.

The connecting member is preferably wide enough to enable the fingers to grip on the connecting member in combination with the rear board. The concept of the invention may not be interpreted limitatively such that there are limitations to these sizes. The size of a folding construction according to the invention can amount to several centimetres up to the size of folders which could for instance comprise an A0 size paper. Possible larger sizes for purposes other than holding in the hand can however be envisaged within the concept of the present invention.

In a further preferred embodiment the folding construction comprises:
- a screen in the rear board and/or the front board,
- an energy storage member,
- a processing unit such as a processor, and
- one or more memories, wherein the various parts are mutually connected in functional manner.

An advantage of such a folding construction is that different content can be displayed on the boards instead of content printed in fixed manner on for instance paper or plastic. A further advantage is that by applying the folding construction the device can be held in one hand while functions of the device and/or the screen or screens can be operated with the other. The folding construction also provides protection for the surfaces of the screens. The advantages available in a screen technology are gained subject to the screen technology used. It is the case for the one screen technology that it can for instance itself radiate light, while for another screen technology it is the case that it uses very little energy, but needs ambient light for this purpose. The screen technologies known at this moment comprise for instance LCD, TFT and e-paper. The use of touch screens is also provided according to the present invention in order to provide an interactive operation by means of the screen.

A further aspect of the present invention relates to a folding construction accordcing to claim 11 comprising a mobile computer device such as a PDA, mobile phone, tablet computer or wrist computer. This embodiment provides the particular advantage that very many functions of known mobile computer devices as stated can be combined with the advantages of a folding construction according to the present invention.

The great variety of dimensions is particularly manifest here. A very flat mobile phone can for instance be provided with a relatively large screen area which is available when the folding construction has been opened. It is possible here to use the screens as input means for inputting data into the mobile phone. It is for instance possible to provide the outer side of the folding construction, for instance the outer side of the front board or the connecting member, with a screen and/or input means so that specific basic functions of the telephone can be operated from the outside, while a greater functionality making greater demands of the screen can be applied after opening the folding construction.

The relative area proportions of the connecting member and the front board and the rear board can be varied here by giving the connecting member, in the case of a mobile phone, a somewhat narrower form, whereby the relative surface area of the screens can be enlarged. In for instance an application as tablet computer, wherein a relatively large device must be held for a long period with the least possible effort and the size is perhaps perceived as of less importance, the grip can be widened relative to the rest of the device.

The mobile computer device of the claimed folding construction preferably comprises screen display means for displaying content on the screen in different orientations. The manner of holding can hereby be varied, and it is for instance possible for the orientation to be adjusted for a person standing opposite the person holding the mobile computer device for the purpose of a simplified presentation of the content to be displayed.

Each screen can preferably serve separately as screen or both screens can together serve as one screen. If for instance two different documents are being displayed on the two screens, they can be shown separately and simultaneously. It is however likewise possible for one document to be displayed in the full width of the two screens when the screens are arranged adjacently of each other, or for one document to be displayed in the length direction when the two screens are arranged one above the other.

The mobile computer device of the claimed folding construction preferably comprises a keyboard or soft keyboard in the rear board which is arranged such that it is possible to type while the screen in the front board can be used to display the content. On a soft keyboard the surface of the keyboard can be displayed on a touchscreen. When a normal keyboard is applied, it can be arranged fixedly on the rear board or releasably on the rear board, or a screen can be placed on the rear board. A soft keyboard is a keyboard displayed by means of software on a touchscreen.

Further advantages, features and details of the present invention will be described in great detail hereinbelow with reference to the accompanying figures. Similar components of different preferred embodiment are designated in the figures with the same reference numerals in order to simplify understanding of the description.
- figure 1 is a perspective view of a first preferred embodiment according to the present invention.
- figure 2 is a perspective view of a detail of the embodiment of figure 1.
- figure 3 is a perspective view of the embodiment of figure 1 in opened position.
- figure 4 is a top view of the embodiment of figure 1 in fully opened position, or planar position.
- figures 5A-C show side views of the embodiment of figure 1.
- figure 6 is a view in fully folded-out planar position of a further preferred embodiment according to the present invention.
- figure 7 is a side view of the embodiment of figure 6 in folded shut position.
- figure 8 is a view in fully folded-out planar position of a further preferred embodiment according to the present invention.
- figure 9 is a perspective view of a detail of a further preferred embodiment according to the present invention.
- figure 10 is a schematic side view of the embodiment of figure 9.
- figure 11 is a side view of a further preferred embodiment according to the present invention.

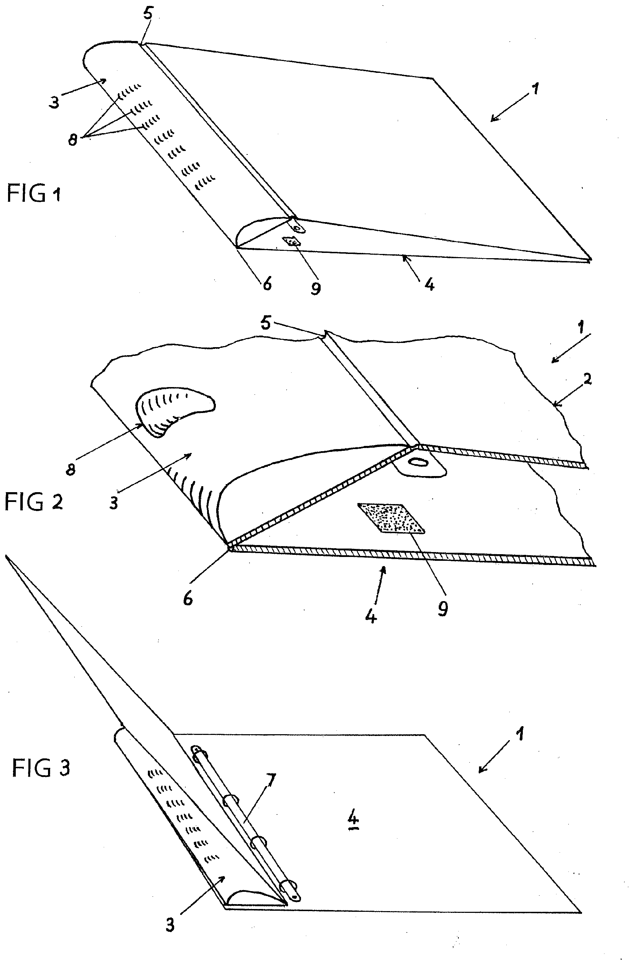

A preferred embodiment according to the present invention (figure 1 - figure 5) relates to a presentation folder 1 comprising a rear board 4. A spine element 3 is mounted on rear board 4 in hinged manner by means of hinges 6. A front board 2 is mounted in similar manner on spine element 3 by means of a hinge member 5. Handgrip recesses 8 are situated in spine element 3 so that fingers of a hand can acquire grip here in relatively simple manner during holding thereof. Situated on the inner side of the folder, as shown for instance in figure 3, is a ring binding 7 which serves as a guide member and which also serves as attaching member for papers or transparent pockets to be arranged in the folder. Using such a ring binding the folder also functions in analogous manner to a conventional ring binder.

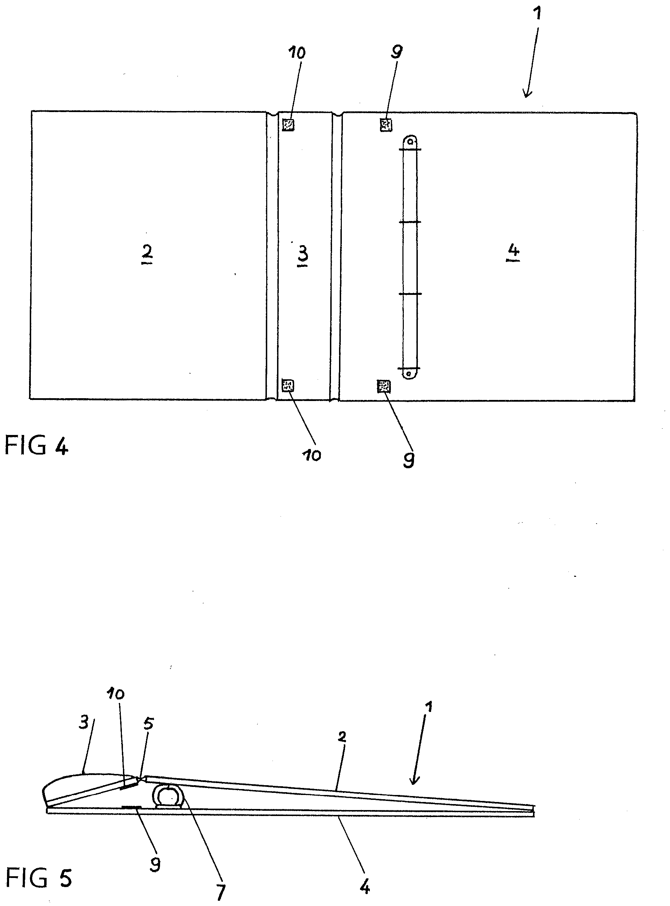

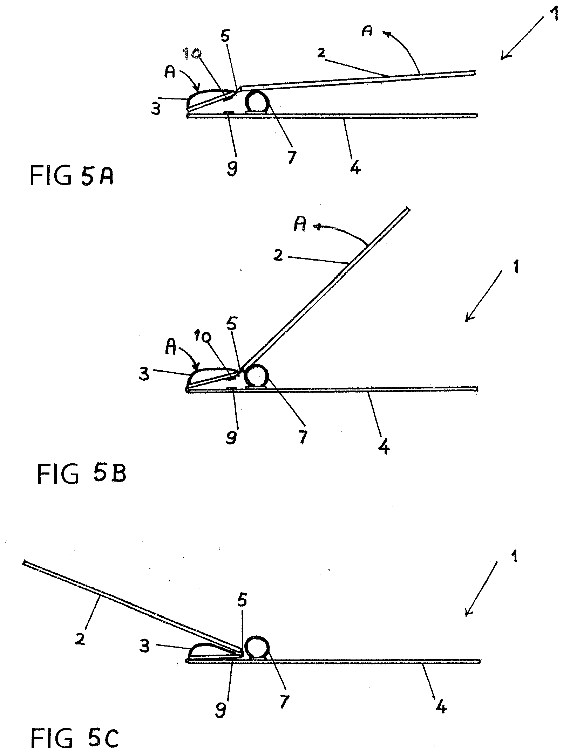

The operation of the folder is as follows. As shown in the side view (figure 5), the relatively thick ring binding or guide member is situated between the rear board and the front board so that there is distance therebetween. As a result there is also distance between spine element 3 and the rear board as well as between hinge element 5 and rear board 4. By applying a squeezing force to the spine element and the rear board the spine element will pivot toward the rear board, carrying along with it hinge 5 and the front board, whereby the other outermost part of the front board will swing wholly upward and the front board will come to lie in the orientation as shown in figure 3. In this orientation it is possible to view and present to others the content of the folder while the folder is being held on the spine element and the part of the connected rear board situated here.

In order to hold the presentation folder in this opened orientation there are provided velcro parts 9 which are fixed on or in the rear board and velcro parts 10 fixed on or in spine element 3. Because these are pressed against each other when the spine element is squeezed, an engagement will occur between the hooks and loops of the velcro tape whereby they are held together. Alternatively, it is possible to provide for instance magnets for this purpose, or for instance a clip pushed at the position of hinge member 5 round hinge member 5 and the rear board.

Figures 5A to 5C show the folder in side view. In this case ring binding 7 is used as guide member for front board 2. The folder is opened by being carried from the position of figure 5A to the position of figure 5C via the position of figure 5B. This is prepared in simple manner according to the present invention by pressing spine element 3 downward in the direction of rear board 4, in other words by means of holding the device in one hand at the spine with the fingers on spine element 3 and a thumb under board 4. With fingers in this position the desired movement can be brought about simply by means of squeezing.

A movement of front board 2 is here created from the position substantially in figure 5A to the position substantially in figure 5C. During the first part of this path the front board is guided by ring binding 7 so that it tilts upward along hinge member 5. As the front board is folded open it is in contact with ring binding 7 and is displaced further until contact occurs with spine element 3, wherein a rest situation results. This rest situation can also be referred to as the wholly opened position of the folder construction.

In line with the advantages of the invention as stated in the foregoing, the advantage here is that the folder can be held easily with one hand in the opened position, wherein this hand need only make a small effort to squeeze and hold the folder in this position. The folder also only requires opening with one hand by means of a simple squeezing movement.

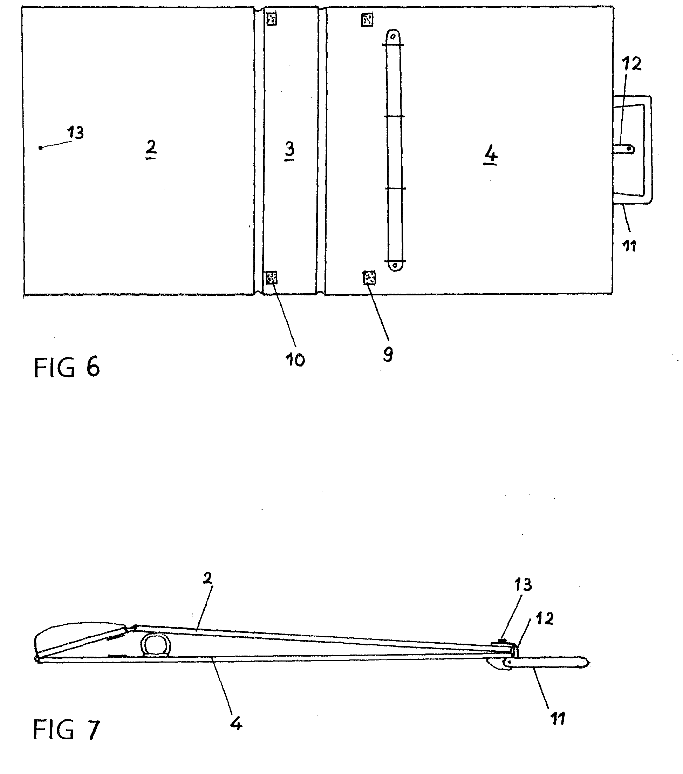

Figure 6 shows a further embodiment wherein additional elements are added. On one side is added a handgrip 11 which is fixed to rear board 4. The device can hereby be carried in both opened and closed positions, preferably the closed position. In order to keep the device in the closed position here, a flap 12 is provided with a pushbutton and a counter-pushbutton 13 mounted on the front board. Alternatively, velcro tape or a magnet can for instance also be applied here.

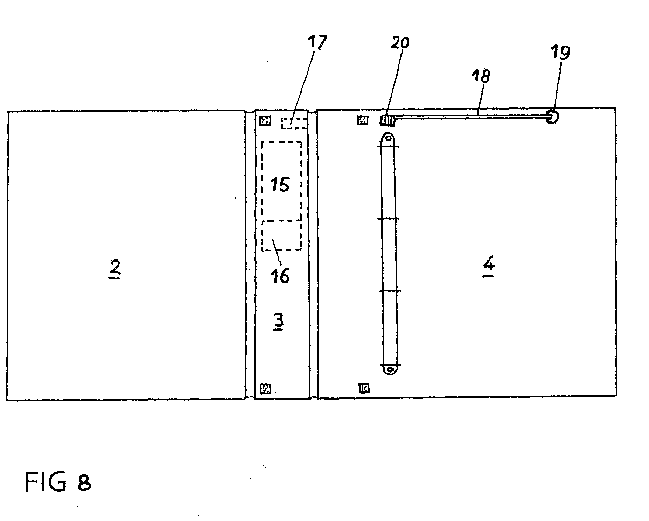

In a further preferred embodiment (figure 8) lighting is provided for the folder, wherein a lamp 19 can be mounted pivotally on a flexible arm by means of a hinge 20 on the rear board. This mounting can alternatively be provided, within the concept of the present invention, in spine element 3 or on front board 2. Provided for energy supply is a battery compartment for batteries 16 or a battery compartment for rechargeable batteries 15. The rechargeable batteries can be recharged by means of an internal adapter 17 or by means of an external adapter which can be connected to the rechargeable battery by means of a connector, which can likewise be designated by reference numeral 17.

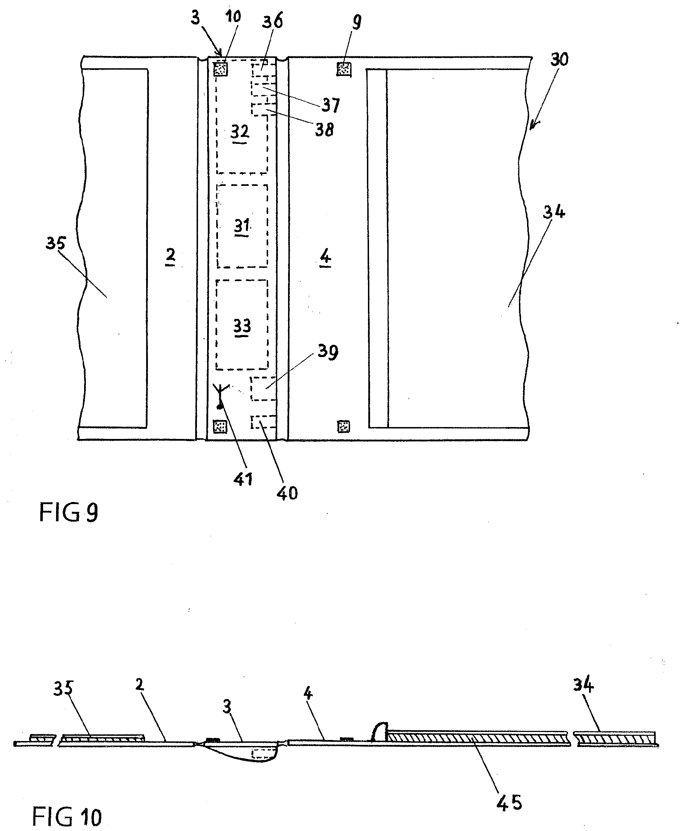

In a further preferred embodiment (figures 9, 10) a portable computer 30 is provided in which use is made of a folding construction with rear board 4, spine element 3 and front board 2. A screen, preferably a touchscreen, is provided in the rear board and the front board. Different aspects of the screen element according to the present invention have been described in the foregoing. This computer 30 comprises elements that are usual for a computer, such as a battery, processor, memory and the like, in spine element 3.

Alternatively, determined elements can likewise be arranged in the front board and/or the rear board. Electrically conductive connections, such as flexible cable bands, are provided between the boards. An advantage of arranging the computer components in spine element 3 is that the necessary space is available in this spine element for the functioning thereof according to the present invention for this purpose. The skilled person will appreciate, within the concept of the present invention, that if insufficient space is available for this purpose such space can likewise be found in the rear board and/or the front board.

Provided in this embodiment are a battery 32, a processor 31 and a memory 33. All electronic components of the computer are connected to each other in known manner by means of a bus or a device with similar functionality. Also provided is a connector 36 for an adapter, a connector 37 for a network connection such as an ethernet connection, and a connector 38 for a network connection such as a USB connection. Further provided is a wireless module 41 for the purpose of for instance WIFI and/or Bluetooth. A card reading unit 39 for one or more known FLASH memory cards is for instance also provided. A connection for a headphone is also provided. Within the concept of the present invention and the general knowledge of portable computers, diverse components and connection options are possible for the purpose of providing functionalities desirable for portable computers. As shown in figure 10, determined components 45 of the computer are provided under touchscreen 34.

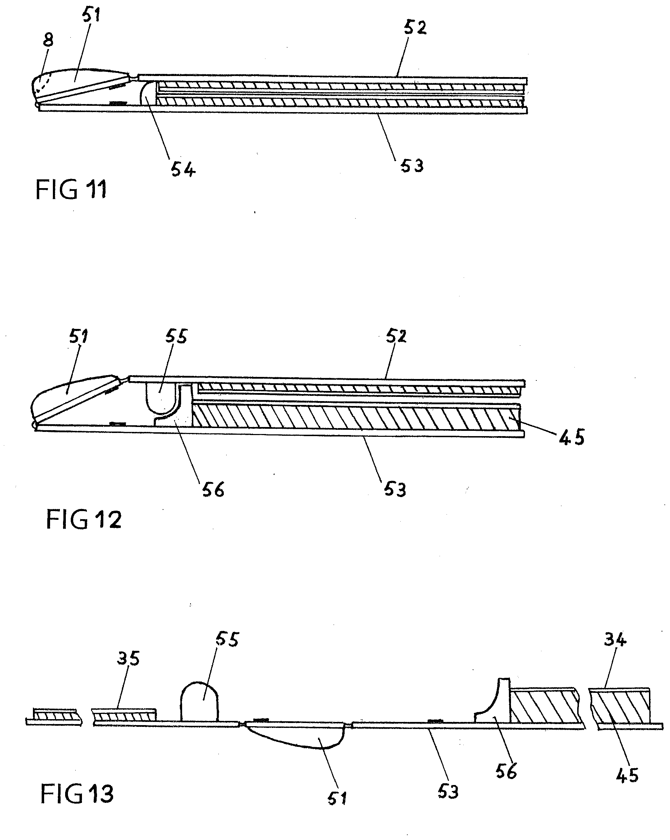

Figure 11 shows a further variant of the portable computer. Shown here in schematic manner is how determined parts of the front board and the rear board can be made in a uniform thickness, while the functionality of the folding mechanism can remain the same. Multiple components of the portable computer can hereby be arranged in the front board or the rear board. It is possible to opt for a relatively thick variant of one of the two boards and a relatively thin variant of the other. It is for instance possible here to reserve a relatively large amount of space in spine element 51. In this embodiment it is likewise possible to arrange components of the computer in guide element 54.

Shown in the figures is a similar embodiment wherein the guide member takes a two-sided form by means of a part 55 fixed to the front board and a part 56 fixed to the rear board. The form of the two parts 55, 56 is here such that a co-action thereof results in the front board folding open relative to the rear board while spine 51 and the rear board are moved toward each other. Within the concept of the invention the function of the guide member can be give a one-sided or two-sided form by means of different configurations, while the function of holding the device along the grippable spine is still achieved.

In this and in other embodiments the cam 55, as well as the cam 54 of a previous embodiment, can comprise a rotatable rod member for the purpose of providing a low friction resistance during performing of the fold-out operation. The rotation can be improved by applying bearings between the rotatable rod member and the suspension thereof (not shown). In this embodiment the rear board takes a thicker form than the front board for the purpose of providing a relatively large amount of space in the rear board for electronic components. As stated, such a space distribution can also be effected in other manner.

In the foregoing figures the guide member is shown as an element fixed to the rear board. It is not essential however for a guide member to be fixed only to the rear board. It is equally possible to have a guide member part fixed to the front board, wherein each of the guide members is responsible for a part of the guiding function. When applied, the folding-open movement can hereby be enhanced. The distance between the guide member, or the distance between the ring system or the half-round cam, and the hinge is preferably greater than the width of the spine, although not much greater.

It is important that the width of the hinge elements or shoulders (i.e. the distance between the boards and the spine element) is sufficient to bring about the opening movement. These shoulders or hinges are preferably suitable for complete opening of the folder, so that the content can be read flat on a table, albeit with a small bump, or it is possible to leaf through the folder.

As shown in the preferred embodiments, the cross-section of the spine element is preferably an arched profile such as a wing profile. This achieves on the one hand that there is a good grip, while also achieving that a part of the outer surface can serve as support for the folded-open front board. For the purpose of keeping the closed folder shut, two so-called tubular rivets can further be provided through which an elastic band is arranged so that in the folded closed position the boards can be clamped to each other by the elastic band, or a part of the sheets can be clamped under the elastic band when the folder is open. Such an elastic band can here also be arranged in the rear board. Materials which can be used are a plurality of materials which are used in per se known manner in folders where diverse types of paper, cardboard or plastic and metals can be used.

In addition to the stated applications of the construction, it can also be embodied with storage space in one or both boards. Material can here be put away in the boards which is for instance used in situations where no fixed storage space is available. An example is the storage and practical availability of first-aid materials. The construction can further be applied as a pallet for a painter. Compartments for holding paint can here be arranged in the front board and/or rear board. Makeup artists can further have diverse different colours of makeup available by arranging a plurality of small compartments in the surface of one or both boards.

The present invention is described in the foregoing on the basis of several preferred embodiments. The rights sought are defined in the appended claims.

## Claims

1. Folding construction (1) for holding in an opened position by means of a simple hand movement comprising elements foldable relative to each other, comprising:
- a rear board (4) for providing a basis for the folding construction,
- a front board (2) for providing a cover or closure,
- at least one connecting member (3) for connecting the rear board and the front board while applying hinge members (5,6),
- at least a guide member for providing a guiding of the front board and rear board relative to each other, wherein:
- the rear board is larger than the front board, and during opening of the folding construction the guide member is arranged for guiding the front board from the closed position to the open position relative to the rear board, **characterized in that**:
- the connecting member comprises a support member (A) for supporting the front board at a predetermined or adjustable angle.

2. Folding construction as claimed in claim 1, wherein the guide member is mounted on the rear board and/or front board, lying substantially along the transition as seen in top view between the connecting member and the front board, and/or comprising at least a guide member for providing a guiding of the front board and rear board relative to each other.

3. Folding construction as claimed in claim 1 or 2, wherein the guide member has a cross-sectional form with a curve in a range between at least a tangent or tangent plane substantially parallel to the rear board and a tangent or tangent plane substantially perpendicular to the rear board.

4. Folding construction as claimed in one or more of the foregoing claims, wherein the connecting member comprises gripping members for the purpose of facilitating the grip of the user of the folding construction.

5. Folding construction as claimed in one or more of the foregoing claims, comprising at least a fixation member for fixing the front board in the opened position with the connecting member in the opened position.

6. Folding construction as claimed in claim 5, wherein the fixation member comprises easily releasable fixing means such as velcro tape, a magnet, a pushbutton, a clip, a snap fastener and the like.

7. Folding construction as claimed in one or more of the foregoing claims, wherein the guide member comprises a ring binding.

8. Folding construction as claimed in one or more of the foregoing claims, wherein in a planar position the rear board, the central part and the front board form a geometrical shape such as a rectangle or an ellipse.

9. Folding construction as claimed in one or more of the foregoing claims, comprising a lamp optionally having an adjustable holder for illuminating the front board and/or the rear board.

10. Folding construction as claimed in one or more of the foregoing claims, wherein the front board and the connecting member are together substantially as large as the rear board or larger than the rear board.

11. Folding construction as claimed in one or more of the foregoing claims, comprising:
- a screen in the rear board and/or the front board,
- an energy storage member,
- a processing unit such as a processor, and
- one or more memories, wherein the various parts are mutually connected in functional manner.

12. Folding construction as claimed in claim 11, comprising a mobile computer device such as a PDA, mobile phone, tablet computer or wrist computer.

13. Folding construction as claimed in claim 11 or 12, comprising screen display means for displaying content on the screen in different orientations, and in which preferably each screen can serve separately as screen and/or both screens can together serve as one screen.

14. Folding construction as claimed in claim 11, comprising a keyboard or soft keyboard in the rear board which is arranged such that it is possible to type while the screen in the front board can be used as screen.

## Patentansprüche

1. Faltkonstruktion (1) zum Halten in einer offenen Position mittels einer einfachen Handbewegung, die Elemente umfasst die relativ zueinander faltbar sind, umfassend:
- eine hintere Platte (4) zur Bereitstellung einem Basis für die Faltkonstruktion,
- eine vordere Platte (2) zur Bereitstellung einer Abdeckung oder eines Verschlusses,
- mindestens ein Verbindungselement (3) zum Verbinden der hintere Platte und der vorderen Platte, während Scharnierelemente (5, 6) angebracht werden,
- mindestens ein Führungselement zum Vorsehen einer Führung der vorderen Platte und der hinteren Platte relativ zueinander, wobei:
- die hintere Platte größer ist als die vordere Platte, und während des Öffnens der Faltkonstruktion das Führungselement so angeordnet ist, dass es die vordere Platte aus der geschlossenen Position in die offene Position relativ zur hinteren Platte führt, **dadurch gekennzeichnet, dass**
- das Verbindungselement umfasst ein Stützelement (A) zum Stützen der vorderen Platte in einem vorbestimmten oder einstellbaren Winkel.

2. Faltkonstruktion nach Anspruch 1, wobei das Führungselement an der hinteren Platte und/oder der vorderen Platte montiert ist und im Wesentlichen entlang des Übergangs in Draufsicht zwischen dem Verbindungselement und der vorderen Platte liegt und/oder eine Platte umfasst mindestens ein Führungselement zum Vorsehen einer Führung der vorderen Platte und der hinteren Platte relativ zueinander.

3. Faltkonstruktion nach Anspruch 1 oder 2, wobei das Führungselement eine Querschnittsform mit einer Kurve in einem Bereich zwischen mindestens einer Tangential- oder Tangentialebene, die im Wesentlichen parallel zur hinteren Platte ist, und einer Tangential- oder Tangentialebene, die im Wesentlichen senkrecht ist, aufweist zur hinteren Platte.

4. Faltkonstruktion nach einem oder mehreren der vorhergehenden Ansprüche, wobei das Verbindungselement Greifelemente zum Zweck des Erleichterns des Griffs des Benutzers der Faltkonstruktion umfasst.

5. Faltkonstruktion nach einem oder mehreren der vorhergehenden Ansprüche, umfassend mindestens ein Befestigungselement zum Befestigen der vorderen Platte in der geöffneten Position, wobei das Verbindungselement in der geöffneten Position ist.

6. Faltkonstruktion nach Anspruch 5, wobei das Befestigungselement leicht lösbare Befestigungsmittel wie ein Klettband, einen Magneten, einen Druckknopf, eine Klammer, einen Schnappverschluss und dergleichen umfasst.

7. Faltkonstruktion nach einem oder mehreren der vorhergehenden Ansprüche, wobei das Führungselement eine Ringbindung umfasst.

8. Faltkonstruktion nach einem oder mehreren der vorhergehenden Ansprüche, wobei in einer ebenen Position die hintere Platte, der zentrale Teil und die vordere Platte eine geometrische Form wie ein Rechteck oder eine Ellipse bilden.

9. Faltkonstruktion nach einem oder mehreren der vorhergehenden Ansprüche, umfassend eine Lampe, die wahlweise einen einstellbaren Halter zur Beleuchtung der vorderen Platte und / oder der Heckplatte aufweist.

10. Faltkonstruktion nach einem oder mehreren der vorhergehenden Ansprüche, wobei die vordere Platte und das Verbindungselement zusammen im wesentlichen so groß wie die hintere Platte oder größer als die hintere Platte sind.

11. Faltkonstruktion nach einem oder mehreren der vorhergehenden Ansprüche, umfassend:
- einen Bildschirm in der hinteren Platte und/oder der vorderen Platte,
- ein Energiespeicherelement,
- eine Verarbeitungseinheit wie einen Prozessor und
- einen oder mehrere Speicher, wobei die verschiedenen Teile funktional miteinander verbunden sind.

12. Faltkonstruktion nach Anspruch 11, umfassend ein mobiles Computergerät wie einen PDA, ein Mobiltelefon, einen Tablet-Computer oder einen Armbandcomputer.

13. Faltkonstruktion nach Anspruch 11 oder 12, umfassend Bildschirmanzeigemittel zum Anzeigen von Inhalt auf dem Bildschirm in verschiedenen Ausrichtungen, und wobei vorzugsweise jeder Bildschirm separat als Bildschirm dienen kann und/oder beide Bildschirme zusammen als ein Bildschirm dienen können.

14. Faltkonstruktion nach Anspruch 11, umfassend eine Tastatur oder Soft-Tastatur in der hinteren Platte, die so angeordnet ist, dass ein Tippen möglich ist, während der Bildschirm in der vorderen Platte als Bildschirm verwendet werden kann.

## Revendications

1. Construction pliable (1) pour maintenir en position ouverte au moyen d'un simple mouvement de la main un appareil comprenant des éléments pouvant être repliés les uns par rapport aux autres, comprenant:
- une planche arrière (4) servant de base à la construction pliable,
- une planche avant (2) pour fournir une couverture ou une fermeture,
- au moins un élément de connexion (3) pour connecter planche arrière et la planche avant tout en appliquant des éléments de charnière (5, 6),
- au moins un élément de guidage pour fournir un guidage des planche avant et planche arrière les uns par rapport aux autres, dans lequel:
- la planche arrière est plus grande que la planche avant et, lors de l'ouverture de la construction pliante, l'élément de guidage est agencé pour guider la planche avant de la position fermée à la position ouverte par rapport à la planche arrière, **caractérisé en ce que**:
- l'élément de connexion comprend un élément de support (A) pour supporter le planche avant selon un angle prédéterminé ou réglable.

2. Construction pliante selon la revendication 1, dans laquelle l'élément de guidage est monté sur la planche avant et/ou la planche avant, s'étendant sensiblement le long de la transition vue de dessus entre l'élément de connexion et la carte avant, et/ou comprenant au moins un élément de guidage servant à guider les planche avant et planche arrière les uns par rapport aux autres.

3. Construction pliante selon la revendication 1 ou 2, dans laquelle l'élément de guidage a une forme en coupe transversale avec une courbe dans une plage entre au moins un plan tangent ou tangent sensiblement parallèle à la planche arrière et un plan tangent ou tangent sensiblement perpendiculaire. à la planche arrière.

4. Construction pliante selon une ou plusieurs des revendications précédentes, dans laquelle l'élément de connexion comprend des éléments de préhension dans le but de faciliter la préhension de l'utilisateur de la construction pliante.

5. Construction pliante selon une ou plusieurs des revendications précédentes, comprenant au moins un élément de fixation pour fixer le planche avant dans la position ouverte, l'élément de connexion dans la position ouverte.

6. Construction pliante selon la revendication 6, dans laquelle l'élément de fixation comprend des moyens de fixation facilement détachables tels qu'une bande velcro, un aimant, un bouton-poussoir, une pince, un bouton-pression et similaires.

7. Construction pliable selon une ou plusieurs des revendications précédentes, dans laquelle l'élément de guidage comprend une liaison par anneau.

8. Construction pliante selon une ou plusieurs des revendications précédentes, dans laquelle, dans une position plane, la planche arrière, la partie centrale et la planche avant forment une forme géométrique telle qu'un rectangle ou une ellipse.

9. Construction pliante selon une ou plusieurs des revendications précédentes, comprenant une lampe comportant éventuellement un support réglable pour éclairer la planche avant et/ou la planche arrière.

10. Construction pliante selon une ou plusieurs des revendications précédentes, dans laquelle la planche avant et l'élément de connexion sont ensemble sensiblement aussi grands que la planche arrière ou plus grands que la planche arrière.

11. Construction pliante selon une ou plusieurs des revendications précédentes, comprenant:
- un écran dans le planche arrière et/ou le planche avant,
- un élément de stockage d'énergie,
- une unité de traitement telle qu'un processeur, et
- une ou plusieurs mémoires, dans lesquelles les différentes parties sont connectées de manière fonctionnelle.

12. Construction pliable selon la revendication 11, comprenant un dispositif informatique mobile tel qu'un PDA, un téléphone portable, une tablette ou un ordinateur de poignet.

13. Construction pliable selon la revendication 11 ou 12, comprenant un moyen d'affichage sur écran pour afficher le contenu sur l'écran dans différentes orientations et dans laquelle, de préférence, chaque écran peut servir séparément d'écran et / ou les deux écrans peuvent conjointement servir d'un seul écran.

14. Construction pliable selon la revendication 11, comprenant un clavier ou un clavier logiciel dans la carte arrière qui est agencé de telle sorte qu'il est possible de taper tandis que l'écran dans la carte avant peut être utilisé comme écran.
